# EUROPEAN PATENT SPECIFICATION

(11) **EP 3 611 673 B1**
(45) Date of publication and mention of the grant of the patent: **11.02.2026**
(21) Application number: 19190653.6
(22) Date of filing: 08.08.2019
(51) Int. Cl.: G06Q 10/00, G06Q 50/10

(54) **INFORMATION PROCESSING APPARATUS, TERMINAL APPARATUS, AND INFORMATION PROCESSING PROGRAM**
INFORMATIONSVERARBEITUNGSVORRICHTUNG, BESTELLENDGERÄTEVORRICHTUNG UND INFORMATIONSVERARBEITUNGSPROGRAMM
APPAREIL DE TRAITEMENT D'INFORMATIONS, APPAREIL DE TERMINAL DE COMMANDE ET PROGRAMME DE TRAITEMENT D'INFORMATIONS

(30) Priority: 17.08.2018 JP 2018153510
(43) Date of publication of application: 19.02.2020
(73) Proprietor: Toshiba Tec Kabushiki Kaisha, 141-8562 Tokyo (JP)
(72) Inventor: YAMAMOTO, Takashi, Shinagawa-ku,, Tokyo 141-8562 (JP)
(74) Representative: Bandpay & Greuter

(56) References cited:
- WO-A1-2009/029595
- US-A1- 2006 229 984
- US-A1- 2011 010 256

## Description

### FIELD

Embodiments described herein relate generally to an information processing apparatus, an order terminal apparatus, and an information processing program.

### BACKGROUND

It has already been known that, in an order system or the like that receives an order in a restaurant or the like, if a designated article cannot be ordered because of stockout or the like, display for recommending another article associated with the article is performed. However, if the display is a display of a list of names of recommended articles, a customer sometimes cannot recognize what kind of an article a recommended article is. In such a case, the customer needs to confirm the recommended article by viewing a menu table that describes contents of articles. Further, in this confirmation work, in some cases, the customer needs to find out or a store clerk needs to inform the customer about a description part of the recommended article in the menu table. Under such circumstances, it has been desired to be able to reduce labor and time for confirmation by a menu table about a recommended article while recommending an alternative article. Related art is described in, for example, JP-A-2014-238713. Related art also includes document US 2011/010256 A1 describing a commodity sales system in which a customer himself or herself inputs a commodity code and carries on a checkout job in a commodity sales store, document WO 2009/029595 A1 describing a system, method and apparatus for customer checkout at a store and document US 2006/229984 A1 describing a POS terminal capable of calculating and charging the shares of a plurality of customers.

### SUMMARY OF INVENTION

To solve such problem, there is provided an order terminal apparatus according to the appended claims.

Preferably, the description includes a page number regarding a page on which the recommended article is described among a plurality of pages of a menu.

The processor is configured to determine that the requested article is not available.

Preferably, the processor is configured to determine that the requested article is not available based on data stored in a first memory of the order terminal apparatus.

Suitably, the processor is configured to determine that the requested article is not available based on data stored in a second memory of an external device in wireless communication with the communication unit.

Suitably still, the communication unit is configured to receive an indication from an external device that the requested article is not available.

Preferably, the order terminal apparatus is a portable device. Preferably still, the order terminal apparatus is a stationary device.

The invention also concerns a method according to the appended claims.

The invention further relates to a computer program comprising instructions which, when the program is executed by a computer, cause the computer to carry out the steps of the method described above.

The invention further concerns a computer-readable medium having stored thereon the computer program described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a schematic configuration of a point-of-sale (POS) system and a main part circuit configuration of a handy terminal according to an embodiment;
FIG. 2 is a diagram illustrating the structure of a data record included in an attribute database;
FIG. 3 is a diagram illustrating the structure of a data record included in a management database;
FIG. 4 is a flowchart of information processing by a processor illustrated in FIG. 1;
FIG. 5 is a flowchart of the information processing;
FIG. 6 is a flowchart of the information processing; and
FIG. 7 is a diagram illustrating a recommendation screen as an example.

### DETAILED DESCRIPTION

An object of embodiments of the present disclosure is to provide an information processing apparatus, an information terminal apparatus, and an information processing program that can reduce labor and time for confirmation by a menu table about a recommended article while recommending an alternative article.

An information processing apparatus according to an embodiment includes a determining section, a deciding section, and a notifying section. The determining section determines a designated article designated as a candidate of an order by operation by an operator. The deciding section decides, if the order of the designated article determined by the determining section cannot be received, another article as a recommended article. The notifying section notifies the recommended article decided by the deciding section to the operator together with a description part in a menu table about the recommended article.

An example of an embodiment is explained below with reference to the drawings. In this embodiment, a POS system including a handy terminal functioning as an information processing apparatus is explained as an example.

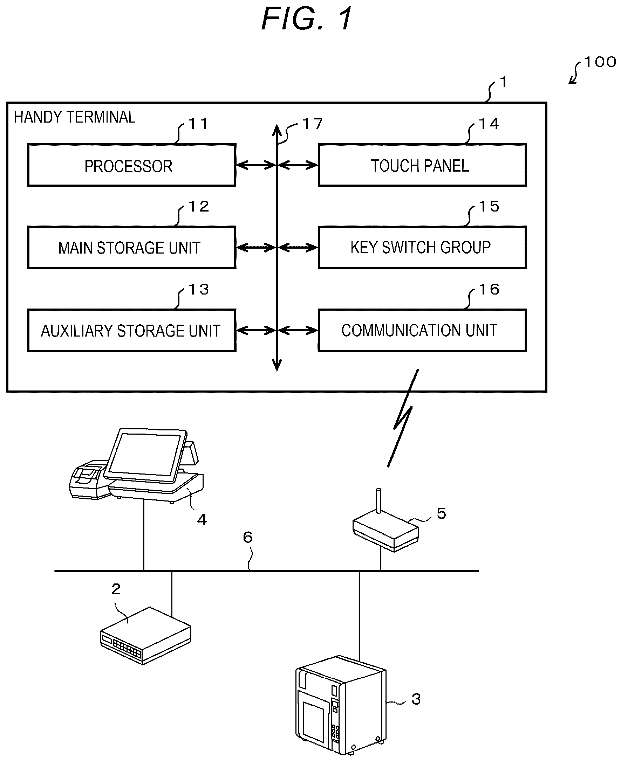

FIG. 1 is a diagram illustrating a schematic configuration of a POS system 100 and a main part circuit configuration of a handy terminal 1 according to this embodiment. The POS system 100 is usable in various facilities such as a restaurant that performs a service for providing commodities such as food and drink according to an order of a customer.

The POS system 100 includes a handy terminal 1, an order management apparatus 2, a slip printer 3, a POS terminal 4, a wireless router 5, and a communication network 6. One handy terminal 1, one slip printer 3, one POS terminal 4, and one wireless router 5 are illustrated in FIG. 1. However, the number of terminals 1, slip printers 3, POS terminals 4, and wireless routers 5 may vary. In most cases, a plurality of handy terminals 1 are included in the POS system 100. The POS system 100 is configured by enabling the handy terminal 1, the order management apparatus 2, the slip printer 3, and the POS terminal 4 to communicate with one another via the communication network 6. The handy terminal 1 is connected to the communication network 6 via the wireless router 5 by wireless communication with the wireless router 5. However, the handy terminal 1 may be directly connected to the communication network 6. Alternatively, the order management apparatus 2, the slip printer 3, and the POS terminal 4 may be connected to the communication network 6 via the wireless router 5 by wireless communication with the wireless router 5. Any two of the handy terminal 1, the order management apparatus 2, the slip printer 3, and the POS terminal 4 may communicate with each other via only the wireless router 5.

The handy terminal 1 is a form of an order terminal that receives operation for an order. The handy terminal 1 is carried and operated by a store clerk. The order management apparatus 2 manages the order received by the handy terminal 1.

The slip printer 3 is set in, for example, a customer service floor or a kitchen. The slip printer 3 set in the customer service floor prints an order slip for a customer. That is, the slip printer 3 set in the customer service floor is a so-called customer printer. The slip printer 3 set in the kitchen prints a cooking slip for a cook. That is, the slip printer 3 set in the kitchen is a so-called kitchen printer.

The POS terminal 4 is set in, for example, the customer service floor or a checkout counter. The POS terminal 4 performs information processing concerning various jobs such as guidance for a customer, order reception, serving, tray service, and accounting. The POS terminal 4 set in the customer service floor mainly executes the information processing concerning the guidance, the order reception, the serving, and the tray service. The POS terminal 4 set in the checkout counter further executes the information processing concerning the accounting. The POS terminal 4 may be specialized for a specific use by performing processing concerning only a part of the jobs.

The wireless router 5 enables, while performing wireless communication with an apparatus having a wireless communication function such as the handy terminal 1, the apparatus to communicate via the communication network 6. The wireless router 5 also enables, by mutually connecting a wireless line to the handy terminal 1 and a wireless line to another communication terminal, communication between the handy terminal 1 and the other communication terminal.

The communication network 6 transmits data exchanged among apparatuses having a communication function such as a handy terminal 1, the order management apparatus 2, the slip printer 3, and the POS terminal 4. As the communication network 6, a local area network (LAN) is typically used. However, as the communication network 6, besides the LAN, the Internet, a virtual private network (VPN), a public communication network, a mobile communication network, and the like can be used independently or used in combination as appropriate.

The handy terminal 1 includes a processor 11, a main storage unit 12, an auxiliary storage unit 13, a touch panel 14, a key switch group 15, a communication unit 16, and a transmission line 17.

The processor 11, the main storage unit 12, and the auxiliary storage unit 13 are connected by the transmission line 17 to configure a computer that executes information processing for realizing functions of the handy terminal 1. The processor 11 is a central part of the computer. The processor 11 executes information processing based on information processing programs such as an operating system, middleware, and application programs stored in the main storage unit 12 or the auxiliary storage unit 13.

The main storage unit 12 is equivalent to a main storage portion of the computer. The main storage unit 12 includes a nonvolatile memory region and a volatile memory region. The main storage unit 12 stores the information processing programs in the nonvolatile memory region. The main storage unit 12 sometimes stores, in the nonvolatile or volatile memory region, data necessary for the processor 11 in executing processing for controlling the sections. The main storage unit 12 uses the volatile memory region as a work area in which data is rewritten as appropriate by the processor 11.

The auxiliary storage unit 13 is equivalent to an auxiliary storage portion of the computer. The auxiliary storage unit 13 is, for example, an electric erasable programmable read-only memory (EEPROM), a hard disc drive (HDD), or a solid state drive (SSD). The auxiliary storage unit 13 saves data used by the processor 11 in performing various kinds of processing or data generated by the processing in the processor 11. The auxiliary storage unit 13 sometimes stores the information processing programs.

The touch panel 14 functions as an input device and a display device. The key switch group 15 includes a plurality of key switches to which articles set as order targets or various functions are allocated.

The communication unit 16 performs wireless communication between the communication unit 16 and the wireless router 5 and performs communication processing for the processor 11 to exchange various data with the order management apparatus 2 and the like. The transmission line 17 includes an address bus, a data bus, and a control signal line and transmits data and control signals exchanged among the connected sections.

As basic hardware of the handy terminal 1, basic hardware of an existing handy terminal of the same type can be used. In general, transfer of the handy terminal 1 is performed in a state in which an information processing program describing information processing explained below is stored in the main storage unit 12 or the auxiliary storage unit 13. However, hardware in a state in which the information processing program is not stored in the main storage unit 12 or the auxiliary storage unit 13 or a state in which an information processing program of another version of the same type is stored in the main storage unit 12 or the auxiliary storage unit 13 and the information processing program describing the information processing explained below may be individually transferred. The handy terminal 1 may be configured by writing the information processing program describing the information processing explained below in the main storage unit 12 or the auxiliary storage unit 13 according to operation by any operator. The transfer of the information processing program may be performed by recording the information processing program in a removable recording medium such as a magnetic disk, a magneto-optical disk, an optical disk, or a semiconductor memory or can be performed by communication via a network.

The operation of the POS system 100 configured as explained above is explained. Contents of various kinds of processing explained below are examples. For example, the order of a part of the processing can be changed, a part of the processing can be omitted, another kind of processing can be added as appropriate.

Sales management performed using the POS system 100 is performed in the same manner as sales management performed by an existing order system. As an example, a flow of the sales management is as explained below. The store clerk operates the handy terminal 1 in order to order a commodity found out by asking a customer. The handy terminal 1 transmits order data representing order content to the order management apparatus 2. The order management apparatus 2 creates, based on the order data received from the handy terminal 1, an order list representing content of the order and manages the order list. If order data concerning an additional order is sent from the handy terminal 1, the order management apparatus 2 updates the order list. Every time the order management apparatus 2 receives order data, the order management apparatus 2 instructs the same slip printer 3 or a different slip printer 3 to print a cooking slip or an order slip corresponding to the order data. The slip printer 3 prints the cooking slip and the order slip according to the instruction. A cook cooks a commodity according to the cooking slip. A store clerk in charge of customer service passes the order slip to the customer. The store clerk in charge of customer service serves the cooked commodity to a customer table. The POS terminal 4 acquires, according to operation by the store clerk or the customer, from the order management apparatus 2, an order list concerning the customer who is requesting accounting. The POS terminal 4 calculates, based on the acquired order list, a price for the provided commodity and settles the price.

In the handy terminal 1, for the operation explained above, the processor 11 executes information processing explained below. An attribute database and a management database are stored in the main storage unit 12 or the auxiliary storage unit 13 for the information processing by the processor 11 explained below.

The attribute database represents, about a plurality of items, attributes about respective articles of commodities set as targets of order reception in the handy terminal 1. The management database is a set of data for managing each of a plurality of items for which attributes are set in the attribute database.

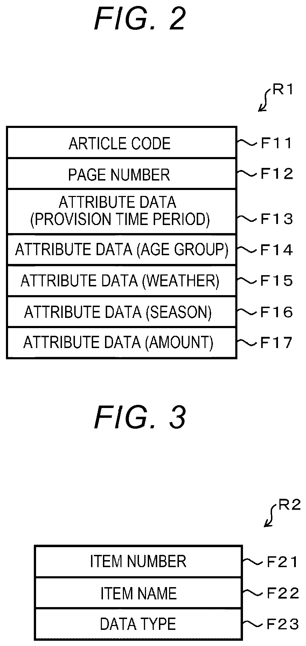

FIG. 2 is a diagram illustrating the structure of a data record included in the attribute database. The attribute database is a set of a plurality of data records R1 associated with each of articles set as targets of order reception. The data record R1 includes fields F11, F12 F13, F14, F15, F16, and F17.

In the field F11, data representing an article code for identifying an article associated with the field F11 is set. In the field F12, a page number of a page described in a menu table about an article associated with the field F12 is set. The menu table describes content about each of articles set as targets of order reception to enable the customer to visually confirm the content. The menu table may be a table of any form. In this embodiment, the menu table is a table of a book type including a plurality of pages. Predetermined five items are respectively allocated to the fields F13 to F17. Attributes about the allocated items are respectively set in the fields F13 to F17 concerning articles associated with the fields F13 to F17. In this embodiment, as an example, it is assumed that a provision time period, an age group, weather, a season, and an amount are respectively allocated to the fields F13 to F17 as items. What kinds of items are respectively allocated to the fields F13 to F17 may be optional and, for example, may be decided as appropriate by a designer, an administrator, or the like of the handy terminal 1. What kind of data is set as the attribute data may be optional and may be decided as appropriate by the designer, the administrator, or the like. The fields F13 to F17 may include, instead of or in addition to the fields, fields to which other items are allocated. The number of fields included in the data record R1 in order to set attribute data may be four or less. A plurality of fields included in the data record R1 in order to set attribute data are identified by ascending-order item numbers according to order in the data record of the fields. That is, in an example illustrated in FIG. 2, 1 to 5 are respectively allocated as item numbers to the items respectively allocated to the fields F13 to F17.

If an article associated with the attribute data set in the field F13 is provided in a limited time period, the attribute data represents the time period when the article is provided. As the attribute data, for example, "morning", "lunch", or "dinner" is set. As the attribute data, data of another format such as "14:00 to 17:00" may be set.

The attribute data set in the field F14 represents an age group of customers set as a main target of an article associated with the attribute data. As the attribute data, for example, "thirties", "forties", or "fifties", is set. As the attribute data, data of another format such as "thirty-one to thirty-five" or "thirty-six to forty" or "adult" or "child" may be set.

The attribute data set in the field F15 represents weather in which an article associated with the attribute data is more likely to be ordered. As the attribute data, for example, "fine", "cloudy", or "rain" is set. As the attribute data, data of another format such as "hot", "cold", or "high humidity" may be set.

The attribute data set in the field 16 represents a season in which an article associated with the attribute data is more likely to be ordered. As the attribute data, for example, "spring", "summer", "autumn", or "winter" is set. As the attribute data, data of another format such as "March to June", "July to October", or "November to February" may be set.

The attribute data set in the field F17 represents an amount of an article associated with the attribute data. As the attribute data, for example, "1,000 yen", "950 yen", or "870 yen" is set. As the attribute data, data of another format such as "900 yen level" or "900 yen to 999 yen" may be set.

FIG. 3 is a diagram illustrating the structure of a data record included in the management database. The management database is a set of a plurality of data records R2 associated with respective items of the attribute data set in the attribute database. In this embodiment, the management database is a set of five data records R2 respectively associated with the five items. The data record R2 includes fields F21, F22, and F23.

In the field F21, data representing an item number for identifying an item associated with the field F21 is set. In the field F22, data representing an item name attached to an item associated with the field F22 is set. As the data, for example, "provision time period", "age group", "weather", "season", and "amount" are set.

In the field F23, data representing a data type of attribute data concerning an item associated with the field F23 is set. In this embodiment, if the attribute data concerning the associated with item is "age group" or "amount", "numerical value" is set in the field F23. In this embodiment, if the attribute data concerning the associated item is "provision time period", "weather", or "season", "text" is set in the field F23.

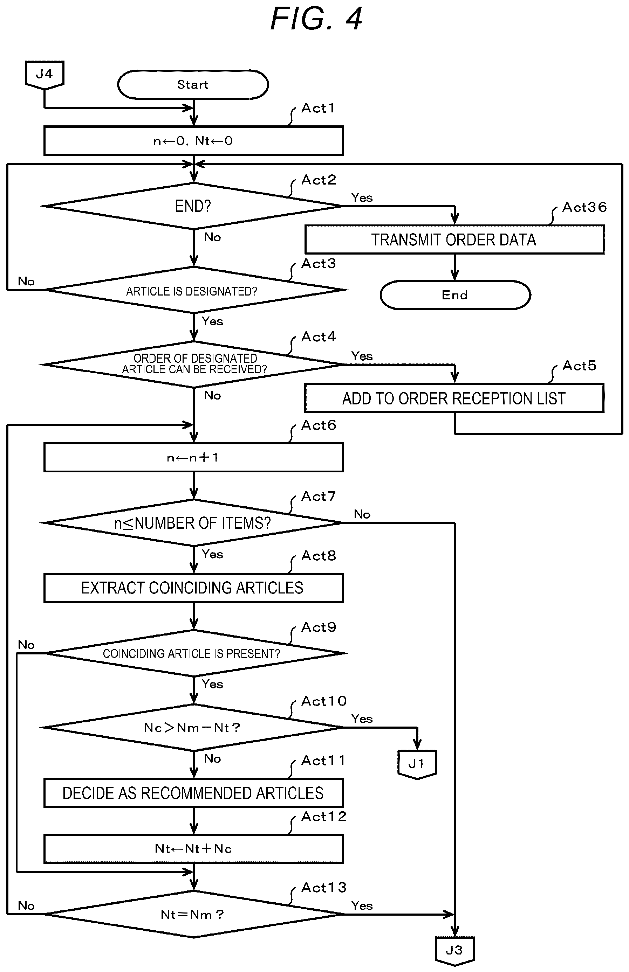

FIGS. 4, 5, and 6 are flowcharts of information processing by the processor 11. If predetermined operation for designating an order reception start is performed in the touch panel 14 or the key switch group 15, the processor 11 executes the information processing according to the information processing program stored in the main storage unit 12 or the auxiliary storage unit 13.

In Act 1, the processor 11 clears a variable n and a variable Nt respectively to 0. The variable n is a variable for managing an item number of an item focused for extraction of a recommended article explained below. The variable Nt represents a total number of articles determined as articles recommended as alternatives (hereinafter referred to as "recommended articles" of a designated article. Therefore, the variable n and the variable Nt are hereinafter referred to as item number n and total number Nt.

In Act 2, the processor 11 confirms whether designation of an article is ended. If the designation of an article is not ended, the processor 11 determines No and proceeds to Act 3. In Act 3, the processor 11 confirms whether an article to be ordered is designated. If an item is not designated, the processor 11 determines No and returns to Act 2. In this way, in Act 2 and Act 3, the processor 11 waits for article designation or an end of the article designation.

The store clerk asks the customer to find out an article that the customer is about to order. The store clerk performs operation for designating the article in the touch panel 14 or the key switch group 15. According to the operation, the processor 11 determines Yes in Act 3 and proceeds to Act 4. At this time, the processor 11 determines the article designated by the operation (hereinafter referred to as designated article). The processor 11 executes the information processing based on the information processing program in this way, whereby the computer including the processor 11 as the central part functions as a determining section that determines a designated article.

In Act 4, the processor 11 confirms whether an order of the designated article can be received. For example, if the designated article is not included in a stockout list stored in the main storage unit 12 or the auxiliary storage unit 13, the processor 11 determines that the order reception is possible. In this case, for example, the processor 11 starts another kind of information processing for interruption performed according to reception by the communication unit 16 of a stockout notification from the order management apparatus 2 and adds an article described in the stockout notification to the stockout list. If there is an order of an article that cannot be received because of some reason, the order management apparatus 2 sends a stockout notification about the article to all the handy terminals 1. The processor 11 may inquire the order management apparatus 2 about whether order reception is possible and perform the determination in Act 4 based on a replay from the order management apparatus 2.

If the order of the designated article is possible, the processor 11 determines Yes in Act 4 and proceeds to Act 5. In Act 5, the processor 11 adds the designated article in an order reception list. The order reception list is data indicating a list of article codes about articles for which order reception in the handy terminal 1 is completed. The order reception data is stored in the main storage unit 12 or the auxiliary storage unit 13. If an article is designated first, the processor 11 creates a new order reception list including an article code of the article and writes the order reception list in the main storage unit 12 or the auxiliary storage unit 13. Thereafter, the processor 11 returns to the waiting state in Act 2 and Act 3. Therefore, if the designation of an order-receivable article is repeated, the processor 11 repeatedly executes Act 5. If a new article is designated in a state in which the order reception list is already written in the main storage unit 12 or the auxiliary storage unit 13, in Act 5, the processor 11 updates the order reception list to add an article code of the article.

If the order reception of the designated article is not possible, the processor 11 determines No in Act 4 and proceeds to Act 6. In Act 6, the processor 11 increases the item number n by 1. In Act 7, the processor 11 confirms whether the item number n is equal to or smaller than the number of items of the attribute data in the attribute database. The number of items is five in the example illustrated in FIG. 2. If the item number n is equal to or smaller than the number of items, the processor 11 determines Yes and proceeds to Act 8. That is, if attribute data of an item with the item number n is present in the attribute database, the processor 11 proceeds to Act 8.

In Act 8, the processor 11 extracts all other articles, attribute data of which about the item with the item number n coincides with the attribute data of the designated article, (hereinafter referred to as coinciding articles). For example, the processor 11 selects, from the attribute database, the data record R1 in which an article code of the designated article is set in the field F11. If the item number n is 1, the processor 11 reads out attribute data set in the field F13 of the selected data record R1. Subsequently, the processor 11 selects, from the attribute database, all other data records R1 in which attribute data coinciding with the readout attribute data is set in the fields F13. The processor 11 sets, as coinciding articles, articles identified by article codes set in the fields F11 of the selected data records R1. As a specific example, it is assumed that ten articles of an article A to an article J are present. It is assumed that, as a provision time period, which is an attribute of an item with an item number 1, "lunch" is set about an article A, an article B, and an article C and an attribute other than the "lunch" is set about an article D to an article J. If the designated article is the article A and the item number n is 1, the processor 11 extracts the article B and the article C as coinciding articles.

In Act 9, the processor 11 confirms whether at least one coinciding article is present. If at least one article is successfully extracted in Act 8, the processor 11 determines Yes and proceeds to Act 10. In Act 10, the processor 11 confirms whether a value of a variable Nc is larger than a value obtained by subtracting the total number Nt from a constant Nm. The processor 11 sets a value of the variable Nc to the number of coinciding articles extracted in Act 8 this time. A value of the constant Nm is a predetermined maximum number of recommended articles. Therefore, in the following explanation, the variable Nc and the constant Nm are referred to as extracted number Nc and maximum number Nm. A value of the maximum number Nm may be optional and may be decided as appropriate by, for example, the designer, the administrator, or the like of the handy terminal 1. In a specific example explained below, it is assumed that the maximum number Nm is five. A value of the total number Nt is 0 when the processor 11 executes Act 10 for the first time. Therefore, if executing Act 10 for the first time, the processor 11 confirms whether the extracted number Nc exceeds the maximum number Nm. If executing Act 10 for the second or subsequent times as explained below, the processor 11 confirms whether the extracted number Nc exceeds a difference between the maximum number Nm and the total number Nt. The difference between the maximum number Nm and the total number Nt is equivalent to the number of articles that can be added as recommended articles (hereinafter referred to as addable number). That is, the processor 11 confirms whether the extracted number Nc of coinciding articles in this time exceeds the addable number. If the extracted number Nc does not exceed the addable number, the processor 11 determines No and proceeds to Act 11.

In Act 11, the processor 11 decides all the coinciding articles extracted this time as recommended articles. In Act 12, the processor 11 updates the value of the total number Nt to a value obtained by adding the extracted number Nc to the existing value of the total number Nt. If finished updating the value of the total number Nt in Act 12, the processor 11 proceeds to Act 13. If no coinciding article is successfully extracted in Act 8, the processor 11 determines No in Act 9, skips Act 10 to Act 12, and proceeds to Act 13.

In Act 13, the processor 11 confirms whether the total number Nt coincides with the maximum number Nm. If the total number Nt does not reach the maximum number Nm, the processor 11 determines No and repeats Act 6 and subsequent acts. Consequently, the processor 11 sets second and subsequent items as targets and attempts to extract other articles, attribute data of the items of which coincides with attribute data of the designated article.

For example, it is assumed that, as an age group, which is an attribute of an item with an item number 2, "thirties" is set about the article A, the article D, and the article E and an attribute other than "thirties" is set about the article F to the article J. If the item number n is 2, the processor 11 extracts the article D and the article E as coinciding articles. Consequently, the extracted number Nc is two and, if the article B and the article C are already decided as the recommended articles as explained above, the addable number is 5-2=3. Therefore, the extracted number Nc does not exceed the addable number yet. Therefore, the processor 11 repeats Act 6 and subsequent acts once more.

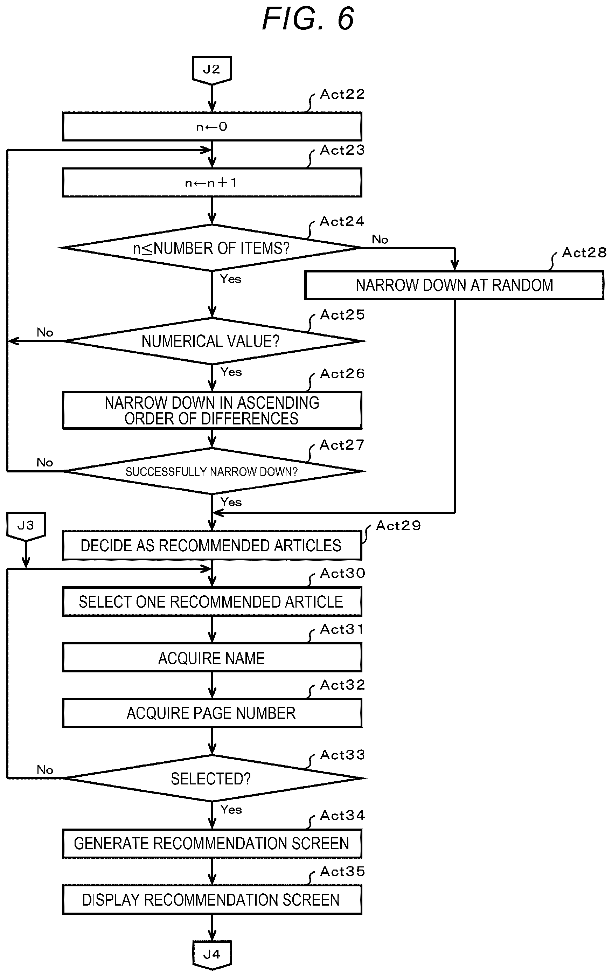

If the total number Nt coincides with the maximum number Nm, the processor 11 determines Yes in Act 13 and proceeds to Act 30 in FIG. 6. If the item number n becomes larger than the number of items included in the attribute database before the total number Nt reaches the maximum number Nm, the processor 11 determines No in Act 7 and proceeds to Act 30 in FIG. 6. That is, if the maximum number Nm of recommended articles are successfully decided or if the maximum number Nm of recommended articles are not successfully decided even if extraction of coinciding articles is attempted targeting all the items included in the attribute database, the processor 11 proceeds to Act 30. Processing in Act 30 and subsequent acts is explained below.

For example, it is assumed that as weather, which is an attribute of an item with an item number 3, "fine" is set about the article A and the article F and an attribute other than "fine" is set about the article F to the article J. If the item number n is 3, the processor 11 extracts the article F as a coinciding article. Consequently, the extracted number Nc is one. If the article B to the article E are already decided as recommended articles as recommended articles, the addable number is 5-4=1. Therefore, the extracted number Nc does not exceed the addable number yet. If the coinciding article is determined as a recommended article, the total number Nt increases to five and coincides with the maximum number Nm. Therefore, the processor 11 proceeds from Act 13 to Act 30 in FIG. 6.

As another specific example, it is assumed that, concerning the article A, "lunch", "thirties", "fine", "autumn", and "900 yen" are respectively set as the provision time period, the age group, the weather, the season, and the amount. On the other hand, it is assumed that "lunch" is set as the provision time period concerning the article B and "thirties" is set as the age group concerning the article C. Further, it is assumed that attributes of other items concerning the article B and the article C and attributes of all items concerning the article D to the article J are different from "lunch", "thirties", "fine", "autumn", and "900 yen". In this case, the processor 11 decides only the article B and the article C as recommended articles. In this case, the processor 11 proceeds from Act 7 to Act 30 in FIG. 6.

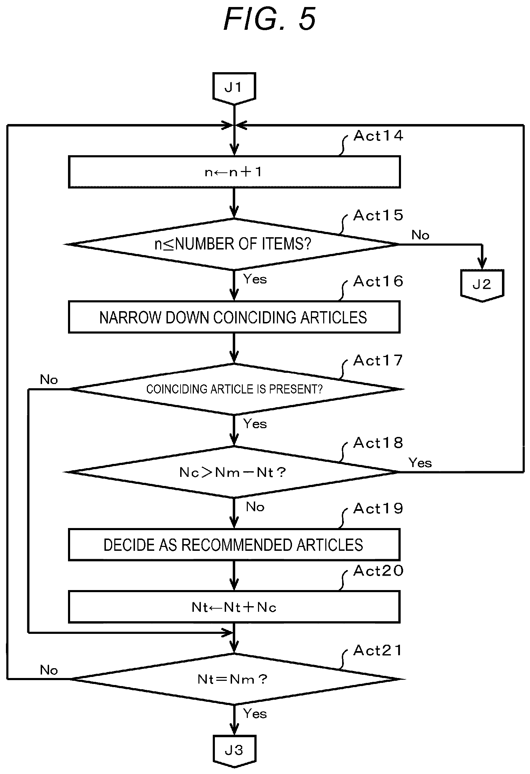

For example, it is assumed that, as the weather, which is the attribute of the item with the item number 3, "fine" is set about the article A, the article F, the article G, and the article H and an attribute other than "fine" is set about the article I and the article J. If the item number n is 3, the processor 11 extracts the article F, the article G, and the article H as coinciding articles. That is, the extracted number Nc is three. If the article B to the article E are already decided as the recommended articles as explained above, the addable number is 5-4=1. Therefore, the extracted number Nc exceeds the addable number. Therefore, in the processing of a loop of Act 6 to Act 13, if the extracted number Nc is larger than a value obtained by subtracting the total number Nt from the maximum number Nm, the processor 11 determines Yes in Act 10. In this case, the processor 11 proceeds to Act 14 in FIG. 5. That is, if the number of recommended articles exceeds the maximum number Nm because all articles extracted this time are determined as recommended articles, the processor 11 proceeds to Act 14 in FIG. 5.

In Act 15, the processor 11 increases the item number n by one. In Act 15, the processor 11 confirms whether the item number n is equal to or smaller than the number of items of the attribute data in the attribute database. If the item number n is equal to or smaller than the number of items, the processor 11 determines Yes and proceeds to Act 16. That is, if attribute data of an item with an item number n is present in the attribute database, the processor 11 proceeds to Act 16.

In Act 16, the processor 11 narrows down the coinciding articles extracted about the item with the item number n-1 to coinciding articles, attribute data of which about the item with the item number n coincides with attribute data of the designated article.

In the specific example explained above, coinciding articles extracted about an item with an item number n-1 are the article F, the article G, and the article H. In this example, if, as a season, which is an attribute of an item with an item number 4, "autumn" is set about the article A and the article G and an attribute other than "autumn" is set about the article F and the article H, the processor 11 narrows down the coinciding articles to the article G. If, as the season, which is the attribute of the item with the item number 4, "autumn" is set about the article A, the article G, and the article H and an attribute other than "autumn" is set about the article F, the processor 11 narrows down the coinciding articles to the article G and the article H.

In Act 17, the processor 11 confirms whether at least one coinciding article is present. If at least one article is left by the narrow-down in Act 16, the processor 11 determines Yes and proceeds to Act 18. In Act 18, the processor 11 confirms whether the extracted number Nc is larger than the value obtained by subtracting the total number Nt from the maximum number Nm. The extracted number is the number of coinciding articles left by the narrow-down in Act 16. If the extracted number Nc does not exceed the addable number, the processor 11 determines No and proceeds to Act 19.

In Act 19, the processor 11 decides all the coinciding articles narrowed down this time as recommended articles. In the specific example, if the coinciding articles are narrowed down to the article G, the extracted number Nc is one. On the other hand, the value obtained by subtracting the total number Nt from the maximum number Nm is 5-4=1. Therefore, the processor 11 determines No in Act 18 and decides the article G as a recommended article.

In the specific example, if the coinciding articles are narrowed down to the article G and the article H, the extracted number Nc is two. On the other hand, the value obtained by subtracting the total number Nt from the maximum number Nm is 5-4=1. Therefore, the processor 11 determines Yes in Act 18. In this case, the processor 11 repeats Act 14 and subsequent acts. That is, the processor 11 attempts further narrow-down of the coinciding articles based on attribute data of lower-order items.

In Act 20, the processor 11 updates the value of the total number Nt to a value obtained by adding the extracted number Nc to the existing value of the total number Nt. If finishing updating the value of the total number Nt in Act 20, the processor 11 proceeds to Act 21. If no coinciding article is left by the narrow-down in Act 16, the processor 11 determines No in Act 17, skips Act 18 to Act 20, and proceeds to Act 21.

In Act 21, the processor 11 confirms whether the total number Nt coincides with the maximum number Nm. If the total number Nt does not reach the maximum number Nm, the processor 11 determines No and repeats Act 14 and subsequent acts. Consequently, the processor 11 attempts narrow-down based on attribute data of lower-order items and determination of recommended articles. If the total number Nt coincides with the maximum number Nm, the processor 11 determines Yes in Act 21 and proceeds to Act 30 in FIG. 6. Processing in Act 30 and subsequent acts is explained below.

In the execution of a loop of Act 14 to Act 21, if the item number n becomes larger than the number of items included in the attribute database before the total number Nt reaches the maximum number Nm, the processor 11 determines No in Act 15 and proceeds to Act 22 in FIG. 6. That is, if the maximum number Nm of recommended articles are not successfully determined even if narrow-down of the coinciding articles is attempted targeting all the items included in the attribute database, the processor 11 proceeds to Act 22 in FIG. 6.

In Act 22, the processor 11 clears the value of the item number n to 0. In Act 23, the processor 11 increases the item number n by 1. In Act 24, the processor 11 confirms whether the item number n is equal to or smaller than the number of items of the attribute data in the attribute database. If the item number n is equal to or smaller than the number of items, the processor 11 determines Yes and proceeds to Act 25. That is, if the attribute data of the item with the item number n is present in the attribute database, the processor 11 proceeds to Act 25.

In Act 25, the processor 11 confirms whether a data type of the attribute data about the item with the item number n is "numerical value". Specifically, the processor 11 acquires the data record R2, the field F21 of which coincides with the item number n, from the management database. The processor 11 confirms whether data set in the field F23 of the acquired data record R2 represents "numerical value". Specifically, data types of the provision time period, the weather, and the season, which are the attributes of the items with the item numbers 1, 3, and 4, are not "numerical value". Therefore, if the item number is 1, 3, or 4, the processor 11 determines No and returns to Act 23. On the other hand, data types of the age group and the amount, which are the attributes of the items with the item numbers 2 and 5, are "numerical value". Therefore, if the item number is 2 or 5, the processor 11 determines Yes and proceeds to Act 26.

In Act 26, the processor 11 extracts, out of the coinciding articles narrowed down so far, Nm-Nt coinciding articles in order from a coinciding article having the smallest absolute value of a difference of a numerical value indicated by the attribute data about the item with the item number n from a numerical value indicated by attribute data concerning a designated article about the same item.

It is assumed that, in the specific example, the processor 11 does not successfully narrow down one of the article G and the article H, which are the coinciding articles, in Act 16 and, as the age group, which is the attribute of the item with the item number 2, "thirties", "forties", and "fifties" are respectively set about the article A, the article G, and the article H. In this case, the processor 11 calculates "10" as the absolute value of "30-40" about the article G. The processor 11 calculates "20" as the absolute value of "30-50" about the article H. As a result, the processor 11 narrows down the coinciding articles to the article G.

In Act 27, the processor 11 confirms whether the processor 11 successfully narrows down the Nm-Nt coinciding articles in Act 26. For example, it is assumed that, separately from the specific example, as the age group, which is the attribute of the item with the item number 2, "thirties", "forties", and "twenties" are respectively set about the article A, the article G, and the article H. The processor 11 calculates "10" as the absolute value of "30-40" about the article G. The processor 11 calculates "10" as the absolute value of "30-20" about the article H. As a result, the processor 11 cannot narrow down the coinciding articles to one of the article G and the article H. If the processor 11 does not successfully narrow down the coinciding articles in this way, the processor 11 determines No in Act 27 and repeats Act 23 and subsequent acts. Consequently, the processor 11 attempts the narrow-down in Act 26 concerning a lower-order item, a data type of which is "numerical value". If the processor 11 successfully narrows down the coinciding articles, the processor 11 determines Yes in Act 27 and proceeds to Act 29.

If the item number exceeds the number of items of the attribute data in the attribute database while the processor 11 does not succeed in the narrow-down in Act 26, the processor 11 determines No in Act 24 and proceeds to Act 28. That is, if the processor 11 cannot succeed in the narrow-down even if the processor 11 executes Act 25 to Act 27 targeting all the items, the processor 11 proceeds to Act 28.

In Act 28, the processor 11 narrows down the Nm-Nt coinciding articles at random out of the coinciding articles narrowed down so far. However, the processor 11 only has to narrow down the coinciding articles irrespective of attribute data according to predetermined rules. The rules may be optional. The processor 11 proceeds to Act 29. In Act 29, the processor 11 decides all the coinciding articles narrowed down this time as recommended articles. Thereafter, the processor 11 proceeds to Act 30. As explained above, the processor 11 sometimes proceeds to Act 30 from any one of Act 7 or Act 13 in FIG. 4 or Act 21 in FIG. 4. That is, if finishing deciding the recommended articles, the processor 11 proceeds to Act 30.

In Act 30, the processor 11 selects one of the recommended articles. In Act 31, the processor 11 acquires a name of the selected recommended article. Specifically, the processor 11 reads out the name of the recommended article from, for example, a commodity master stored in the auxiliary storage unit 13. The commodity master is a database that describes an article code, a name, a unit price, and the like concerning each of articles set as targets of order reception in the POS system 100. The commodity master may be stored in the order management apparatus 2, the POS terminal 4, a not-illustrated server apparatus, or the like. In this case, the processor 11 acquires the name of the recommended article from the order management apparatus 2, the POS terminal 4, or the not-illustrated server apparatus via the communication network 6. The processor 11 saves the acquired name in the main storage unit 12 or the auxiliary storage unit 13.

In Act 32, the processor 11 acquires a page number set in the field F12 of the data record R1 associated with the recommended article in the attribute database. The processor 11 saves the acquired page number in the main storage unit 12 or the auxiliary storage unit 13 in association with the name.

In Act 33, the processor 11 confirms whether all the recommended articles determined at a point in time when the processor 11 proceeds to Act 30 first are selected. If an unselected recommended article is present, the processor 11 determines No and repeats Act 30 and subsequent acts in the same manner as explained above. At this time, in Act 30, the processor 11 selects a recommended article not selected yet in the repetition of Act 30. In this way, the processor 11 acquires a name and a page number concerning each of the recommended articles by executing a loop of Act 30 to Act 33. If finishing acquiring names and page numbers concerning all the recommended articles, the processor 11 determines Yes in Act 33 and proceeds to Act 34.

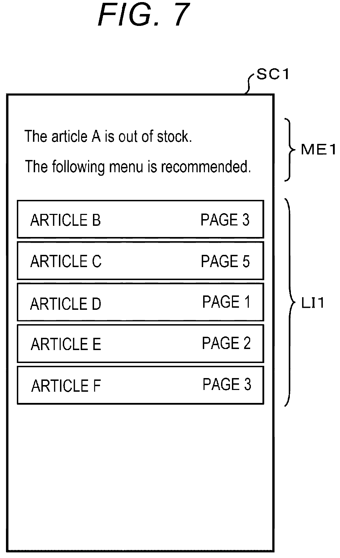

In Act 34, the processor 11 generates a recommendation screen. The recommendation screen is a screen showing a list of recommended articles. FIG. 7 is a diagram illustrating a recommendation screen SC1 as an example. The recommendation screen SC1 shows the article B to the article F as recommended articles as explained above. The recommendation screen SC1 shows a message ME1 and a list LI1. The message ME1 is a character message indicating that the article A, which is a designated article, is out of stock and articles shown in the list LI1 are recommended articles. The list LI1 shows a name of each of the recommended articles. The list LI1 shows, beside the name, a page number of a page of a menu table described about content of each of the recommended articles. The processor 11 shows the name and the page number, which are acquired about each of the recommended articles as explained above, side by side on the same row to thereby generate the list LI1. In Act 35, the processor 11 causes the touch panel 14 to display the recommendation screen generated as explained above. Thereafter, the processor 11 returns to Act 1 in FIG. 4.

If finishing designating, in the handy terminal 1, all the articles that the customer is about to order, the store clerk performs, on the touch panel 14 or the key switch group 15, predetermined operation for instructing to end the designation of the articles. According to the operation, the processor 11 determines Yes in Act 2 in FIG. 4 and proceeds to Act 36.

In Act 36, the processor 11 transmits order data including the order reception list to the order management apparatus 2. Consequently, the processor 11 requests the order management apparatus 2 to order the articles included in the order reception list. The processor 11 executes the information processing based on the information processing program in this way, whereby the computer including the processor 11 as the central part functions as a requesting section that performs the request. The processor 11 ends the information processing illustrated in FIGS. 4, 5, and 6.

The processor 11 executes the information processing based on the information processing program in this way, whereby the computer including the processor 11 as the central part functions as a deciding section that decide recommended articles. The computer including the processor 11 as the central part displays the recommendation screen on the touch panel 14 in Act 14, Act 23, or Act 32 to thereby notify the recommended articles to the operator together with a description part in the menu table about the recommended articles. The computer functions as a notifying section that perform such notification.

As explained above, with the handy terminal 1, if a designated commodity cannot be ordered, an alternative article can be recommended by the display of the recommendation screen. For each of the recommended articles, a page number of a page in which content of the article is described in the menu table is shown. Therefore, the store clerk informs the page number to the customer together with a name of a recommended menu, whereby the customer can easily confirm the recommended article with the menu table. The store clerk only has to inform the displayed information to the customer. Therefore, a burden due to this is small.

With the handy terminal 1, the recommended articles are decided, for each of the articles, according to a state of coincidence of attribute data respectively set concerning a plurality of items. Therefore, in a change of a menu that is changed only about a part of items, it is unnecessary to perform some correction of data concerning articles in which a change does not occur. It is possible to reduce labor and time for maintenance involved in the menu change.

With the handy terminal 1, the attribute data representing the attributes of the articles is used as setting data referred to in deciding recommended articles. Therefore, similarity of the attribute is reflected on the determination of the recommended articles. Consequently, it is possible to determine, as the recommended articles, articles more suitable to be recommended as alternatives.

With the handy terminal 1, if a large number of other articles, attribute data of which concerning items with higher priority levels coincides with attribute data of the designated articles, are present, the recommended articles are narrowed down according to a state of coincidence of attribute data concerning items with lower priority levels than the items. Therefore, the number of recommended articles does not become excessively large.

With the handy terminal 1, the number of recommended articles displayed on the recommendation screen is limited up to the maximum number Nm. Therefore, it is possible to facilitate selection of articles from the recommendation screen and effectively perform recommendation. That is, if the number of recommended articles displayed on the recommendation screen is too large, it is troublesome to select an article to be ordered out of the large number of recommended articles. Therefore, the recommendation screen is sometimes not referred to because of such a trouble. On the other hand, with the handy terminal 1, it is possible to avoid such a trouble and improve possibility of utilization of the recommendation screen.

Various modified implementations of this embodiment are possible as explained below. The processor 11 may decide the recommended articles with any method different from the method in the embodiment. For example, the processor 11 decides, as the recommended articles, articles associated with the articles in advance.

The processor 11 may acquire a page number included in data other than the attribute database such as the commodity master. The processor 11 may generate the recommendation screen to show where in a plurality of areas formed by dividing one page of the menu table the recommended articles are displayed.

One or both of the attribute database and the management database may be stored in, for example, a storage device included in the order management apparatus 2 or a storage device provided on the outside of the handy terminal 1 such as a network drive connected to the communication network 6.

As the setting data, data not representing attributes of articles may be included instead of or in addition to the attribute data. For example, an identification code of a group optionally decided by the administrator may be used as the setting data.

The operator does not need to be the store clerk and may be, for example, a customer. That is, the handy terminal 1 may be an order terminal apparatus called table terminal or the like that is disposed in a customer table and receives an order by operation by the customer. Alternatively, the handy terminal 1 may be an order terminal apparatus of a type that is set, for example, near an entrance of a store and operated by the customer mainly when the customer enters the store. The order terminal apparatus of this type is sometimes an order terminal apparatus of a vending machine type including a settlement function. Further, the order terminal apparatus can also be realized as an information processing apparatus for information provision not having a function of receiving an order.

Notification of the recommended articles and the page number to the operator may be performed by any method different from the screen display such as output of a voice message.

Every time the processor 11 determines Yes in Act 4, the processor 11 may transmit order data for requesting order reception of designated articles at that time. In this case, the processor 11 does not perform Act 5 and Act 36.

A part or all of the functions realized by the processor 11 according to the information processing can also be realized by hardware that executes information processing not based on a computer program such as a logic circuit. Each of the functions explained above can also be realized by combining software control with the hardware such as the logic circuit.

## Claims

1. An order terminal apparatus **(1)** for providing commodities according to an order of a customer in a restaurant comprising a POS system **(100),** the POS system **(100)** comprising the order terminal apparatus **(1)** and an order management apparatus **(2),** the order terminal apparatus **(1)** comprising:
**a main storage unit (12) storing an information processing program;**
a processor **(11)** configured to, **when executing the information processing program:**
- determine a requested article designated as a candidate of an order based on an operation for an order by an operator;
- determine that the requested article is not available;
- if the requested article is not available:
extract coinciding articles based on a list of item, for each of the coinciding articles, a respective item of the list of the coinciding article corresponding to one item of the list of the requested article, the list of items comprising at least the time period when the article is provided, an age group of customers and weather in which an article associated with the list of items is more likely to be ordered;
- decide articles as recommended articles based on the extracted coinciding articles and the list of items of coinciding articles by, iteratively for each item of the list of items:
-- determining whether the number of a set of coinciding articles for which the item corresponds to the item of the requested article is lower than a maximum number;
-- if the number is lower than the maximum number:
--- defining each of the coinciding articles of the set as a respective recommended article; and
--- updating the maximum number by subtracting the number of coinciding articles of the set; and
-- if the number is higher than the maximum number:
--- ordering the coinciding articles of the set in ascending order of differences of the item; and
--- defining one or more coinciding articles of the set each as a respective recommended article such that the total number of coinciding article defined as recommended articles is equal to the maximum number, the one or more coincident articles being the highest ordered coincident articles in the set; and
- generate, by the processor, a recommendation screen **(SC1)** showing a list **(LI1)** of recommended articles **(articles B to article F)** together with a description about the recommended articles **(articles B to article F);**
a display **(14)** configured to provide the generated recommendation screen **(SC1)** in response to the requested article not being available; and
a communication unit **(16)** configured to transmit a request to **the** order management apparatus **(2)** to place an order of a designated article, the designated article being an article for which an order of which can be placed.

2. The order terminal apparatus **(1)** according to claim 1, wherein the description includes, for each recommended article, a page number regarding a page on which the recommended article is described among a plurality of pages of a menu.

3. The order terminal apparatus **(1)** according to claim 1 or 2, wherein the processor **(11)** is configured to determine that the requested article is not available based on data stored in a first memory of the order terminal apparatus **(1).**

4. The order terminal apparatus **(1)** according to any one of claims 1 to 3, wherein the processor **(11)** is configured to determine that the requested article is not available based on data stored in a second memory of an external device in wireless communication with the communication unit **(16).**

5. The order terminal apparatus **(1)** according to any one of claims 1 to 4, wherein the communication unit **(16)** is configured to receive an indication from an external device that the requested article is not available.

6. The order terminal apparatus **(1)** according to any one of claims 1 to 5, wherein the order terminal apparatus **(1)** is a portable device.

7. The order terminal apparatus **(1)** according to any one of claims 1 to 6, wherein the order terminal apparatus **(1)** is a stationary device.

8. A method for providing commodities according to an order of a customer in a restaurant comprising a POS system **(100),** the POS system **(100)** comprising a handy terminal apparatus **(1)** and an order management apparatus **(2),** the handy terminal **(1)** comprising a processor **(11),** a main storage unit **(12) storing an information processing program,** a communication unit **(16)** and a touch panel **(14),** the method comprising:
determining, by the processor **(11) executing the information processing program,** a requested article designated as a candidate of an order based on an operation for an order by an operator;
determining if the requested article is available by determining if the requested article is included in a stockout list stored in the main storage unit **(12),** the processor **(11)** adding articles described in stockout notifications to the stockout list, the stockout notifications being received by the communication unit **(16)** from the order management apparatus **(2);**
if the requested article is not available:
- extracting, by the processor **(11) executing the information processing program,** coinciding articles based on a list of item, for each of the coinciding articles, a respective item of the list of the coinciding article corresponding to one item of the list of the requested article, the list of items comprising at leastthe time period when the article is provided, an age group of customers and weather in which an article associated with the list of items is more likely to be ordered;
- deciding, by the processor **(11) executing the information processing program,** articles as recommended articles based on the extracted coinciding articles and the list of items of coinciding articles, the deciding comprising, iteratively for each item of the list of items:
-- determining whether the number of a set of coinciding articles for which the item corresponds to the item of the requested article is lower than a maximum number;
-- if the number is lower than the maximum number:
--- defining each of the coinciding articles of the set as a respective recommended article; and
--- updating the maximum number by subtracting the number of coinciding articles of the set; and
-- if the number is higher than the maximum number:
--- ordering the coinciding articles of the set in ascending order of differences of the item; and
--- defining one or more coinciding articles of the set each as a respective recommended article such that the total number of coinciding article defined as recommended articles is equal to the maximum number, the one or more coincident articles being the highest ordered coincident articles in the set;
- generating, by the processor **(11),** a recommendation screen **(SC1)** showing a list (**LI1**) of recommended articles **(articles B to article F),** the list **(LIl)** showing a name of each of the recommended articles and a page number of a page of a menu table describing about content of each of the recommended articles; and
- displaying, on the touch panel **(14),** the generated recommendation screen **(SC1).**

9. A computer program comprising instructions which, when the program is executed by a computer, cause the computer to carry out the steps of the method according to claim 8.

10. A computer-readable medium having stored thereon the computer program of claim 9.

## Patentansprüche

1. Bestellendgerätevorrichtung (1) zum Bereitstellen von Waren gemäß einer Bestellung eines Kunden in einem Restaurant, umfassend ein POS-System (100), wobei das POS-System (100) die Bestellendgerätevorrichtung (1) und eine Bestellverwaltungsvorrichtung (2) umfasst, wobei die Bestellendgerätevorrichtung (1) Folgendes umfasst:
eine Hauptspeichereinheit (12), die ein Informationsverarbeitungsprogramms speichert;
einen Prozessor (11), der konfiguriert ist, um, wenn er das Informationsverarbeitungsprogramm ausführt:
- einen angeforderten Artikel zu bestimmen, der basierend auf einem Vorgang für eine Bestellung durch einen Bediener, als Kandidat einer Bestellung festgelegt wurde;
- zu bestimmen, dass der angeforderte Artikel nicht verfügbar ist;
- falls der angeforderte Artikel nicht verfügbar ist:
passende Artikel, basierend auf einer Liste von Posten, für jeden passenden Artikel zu extrahieren, wobei ein entsprechender Posten der Liste des passenden Artikels einem Posten der Liste des angeforderten Artikels entspricht, wobei die Liste von Posten mindestens einen Zeitraum umfasst, in dem der Artikel bereitgestellt wird, eine Altersgruppe von Kunden und die Wetterverhältnisse, bei denen ein Artikel, der mit der Liste von Posten assoziiert ist, wahrscheinlicher bestellt wird;
- Artikel basierend auf den extrahierten passenden Artikeln und der Liste von Posten von passenden Artikeln als empfohlene Artikel zu bestimmen, indem iterativ für jeden Posten der Liste von Posten Folgendes erfolgt:
-- Bestimmen, ob die Anzahl eines Satzes von passenden Artikeln, für den der Posten dem Posten des angeforderten Artikels entspricht, geringer als eine maximale Anzahl ist;
-- falls die Anzahl geringer als die maximale Anzahl ist:
--- Definieren jedes der passenden Artikel des Satzes als einen entsprechenden empfohlenen Artikel; und
--- Aktualisieren der maximalen Anzahl durch Subtrahieren der Anzahl von passenden Artikeln von dem Satz; und
-- falls die Anzahl höher als die maximale Anzahl ist:
--- Sortieren der passenden Artikel des Satzes in aufsteigender Reihenfolge der Unterschiede des Postens; und
--- Definieren eines oder mehrerer passender Artikel des Satzes jeweils als einen entsprechenden empfohlenen Artikel, sodass die gesamte Anzahl von passenden Artikeln, die als empfohlene Artikel definiert werden, gleich der maximalen Anzahl ist, wobei der eine oder die mehreren passenden Artikel die am höchsten sortierten passenden Artikel in dem Satz sind; und
- Erzeugen, durch den Prozessor, eines Empfehlungsbildschirms (SC1), der eine Liste (LI1) von empfohlenen Artikeln (Artikel B bis Artikel F) zeigt, zusammen mit einer Beschreibung der empfohlenen Artikel (Artikel B bis Artikel F);
eine Anzeige (14), die konfiguriert ist, um den erzeugten Empfehlungsbildschirm (SC1) in Reaktion darauf, dass der angeforderte Artikel nicht verfügbar ist, bereitzustellen; und
eine Kommunikationseinheit (16), die konfiguriert ist, um eine Anfrage an die Bestellverwaltungsvorrichtung (2) zu übertragen, um eine Bestellung eines festgelegten Artikels aufzugeben, wobei der festgelegte Artikel ein Artikel ist, für den eine Bestellung aufgegeben werden kann.

2. Bestellendgerätevorrichtung (1) nach Anspruch 1, wobei die Beschreibung für jeden empfohlenen Artikel eine Seitenzahl beinhaltet, die sich auf eine Seite bezieht, auf der der empfohlene Artikel unter einer Vielzahl von Seiten eines Menüs beschrieben wird.

3. Bestellendgerätevorrichtung (1) nach Anspruch 1 oder 2, wobei der Prozessor (11) konfiguriert ist, um, basierend auf Daten, die in einem ersten Speicher der Bestellendgerätevorrichtung (1) gespeichert sind, zu bestimmen, dass der angeforderte Artikel nicht verfügbar ist.

4. Bestellendgerätevorrichtung (1) nach einem der Ansprüche 1 bis 3, wobei der Prozessor (11) konfiguriert ist, um basierend auf Daten, die in einem zweiten Speicher eines externen Geräts in drahtloser Kommunikation mit der Kommunikationseinheit (16) gespeichert sind, zu bestimmen, dass der angeforderte Artikel nicht verfügbar ist.

5. Bestellendgerätevorrichtung (1) nach einem der Ansprüche 1 bis 4, wobei die Kommunikationseinheit (16) konfiguriert ist, um von einem externen Gerät eine Meldung zu empfangen, dass der angeforderte Artikel nicht verfügbar ist.

6. Bestellendgerätevorrichtung (1) nach einem der Ansprüche 1 bis 5, wobei die Bestellendgerätevorrichtung (1) ein tragbares Gerät ist.

7. Bestellendgerätevorrichtung (1) nach einem der Ansprüche 1 bis 6, wobei die Bestellendgerätevorrichtung (1) ein stationäres Gerät ist.

8. Verfahren zum Bereitstellen von Waren gemäß einer Bestellung eines Kunden in einem Restaurant, umfassend ein POS-System (100), wobei das POS-System (100) eine handliche Endgerätevorrichtung (1) und eine Bestellverwaltungsvorrichtung (2) umfasst, wobei das handliche Endgerät (1) einen Prozessor (11), eine Hauptspeichereinheit (12), die ein Informationsverarbeitungsprogramm speichert, eine Kommunikationseinheit (16) und ein Touchpanel (14) umfasst, wobei das Verfahren Folgendes umfasst:
Bestimmen, durch den Prozessor (11), der das Informationsverarbeitungsprogramm ausführt, eines angeforderten Artikels, der basierend auf einem Vorgang für eine Bestellung durch einen Bediener, als Kandidat für eine Bestellung festgelegt wurde;
Bestimmen, ob der angeforderte Artikel verfügbar ist, durch Bestimmen, ob der angeforderte Artikel in eine Fehlbestandsliste eingeschlossen ist, die in der Hauptspeichereinheit (12) gespeichert ist, wobei der Prozessor (11) Artikel, die in den Fehlbestandsmeldungen beschrieben sind, der Fehlbestandsliste hinzufügt, wobei die Fehlbestandsmeldungen durch die Kommunikationseinheit (16) von der Bestellverwaltungsvorrichtung (2) empfangen werden;
falls der angeforderte Artikel nicht verfügbar ist:
- Extrahieren, durch den Prozessor (11), der das Informationsverarbeitungsprogramm ausführt, von passenden Artikeln, basierend auf einer Liste von Posten, für jeden der passenden Artikel, wobei ein entsprechender Posten der Liste der passenden Artikel einem Posten der Liste von angeforderten Artikel entspricht, wobei die Liste von Posten mindestens den Zeitraum umfasst, in dem der Artikel bereitgestellt wird, eine Altersgruppe von Kunden und die Wetterverhältnisse, bei denen ein Artikel, der mit der Liste von Posten assoziiert ist, wahrscheinlicher bestellt wird;
- Bestimmen, durch den Prozessor (11), der das Informationsverarbeitungsprogramm ausführt, von Artikeln basierend auf den extrahierten passenden Artikeln und der Liste von Posten von passenden Artikeln, als empfohlene Artikel, wobei das Bestimmen iterativ für jeden Posten der Liste von Posten Folgendes umfasst:
-- Bestimmen, ob die Anzahl eines Satzes von passenden Artikeln, für den der Posten dem Posten des angeforderten Artikels entspricht, geringer als eine maximale Anzahl ist;
-- falls die Anzahl geringer als die maximale Anzahl ist:
--- Definieren jedes der passenden Artikel des Satzes als einen entsprechenden empfohlenen Artikel; und
--- Aktualisieren der maximalen Anzahl durch Subtrahieren der Anzahl von passenden Artikeln von dem Satz; und
-- falls die Anzahl höher als die maximale Anzahl ist:
--- Sortieren der passenden Artikel des Satzes in aufsteigender Reihenfolge der Unterschiede des Postens; und
--- Definieren eines oder mehrerer der passenden Artikel des Satzes jeweils als einen entsprechenden empfohlenen Artikel; sodass die gesamte Anzahl von passenden Artikeln, die als empfohlene Artikel definiert werden, gleich der maximalen Anzahl ist, wobei der eine oder die mehreren Artikel die am höchsten sortierten passenden Artikel in dem Satz sind;
- Erzeugen, durch den Prozessor (11), eines Empfehlungsbildschirms (SC1), der eine Liste (LI1) von empfohlenen Artikeln (Artikel B bis Artikel F) zeigt, wobei die Liste (LI1) einen Namen jedes der empfohlenen Artikel und eine Seitenzahl einer Seite einer Menütabelle zeigt, die den Inhalt jedes der empfohlenen Artikel beschreibt; und
- Anzeigen des erzeugten Empfehlungsbildschirms (SC1) auf dem Touchpanel (14).

9. Computerprogramm, umfassend Anweisungen, die, wenn das Programm von einem Computer ausgeführt wird, den Computer veranlassen, die Schritte des Verfahrens nach Anspruch 8 durchzuführen.

10. Computerlesbares Medium, auf dem das Computerprogramm nach Anspruch 9 gespeichert ist.

## Revendications

1. Appareil de terminal de commande (1) destiné à fournir des marchandises selon la commande d'un client dans un restaurant comprenant un système de point de vente, POS, **(100),** le système POS **(100)** comprenant l'appareil de terminal de commande (1) et un appareil de gestion de commandes (2), l'appareil de terminal de commande (1) comprenant :
une unité de stockage principale (12) stockant un programme de traitement d'informations ;
un processeur (11) configuré pour, lors de l'exécution du programme de traitement d'informations :
- déterminer un article demandé désigné comme candidat d'une commande sur la base d'une opération effectuée pour une commande par un opérateur;
- déterminer que l'article demandé est indisponible ;
- si l'article demandé est indisponible :
extraire des articles coïncidents sur la base d'une liste d'éléments, pour chacun des articles coïncidents, un élément respectif de la liste des articles coïncidents correspondant à un élément de la liste des articles demandés, la liste d'éléments comprenant au moins la période de temps pendant laquelle l'article est fourni, une tranche d'âge des clients et les conditions météorologiques dans lesquelles un article associé à la liste d'éléments est plus susceptible d'être commandé ;
- juger des articles comme étant des articles recommandés sur la base des articles coïncidents extraits et de la liste d'éléments des articles coïncidents en, de manière itérative pour chaque élément de la liste d'éléments :
-- déterminant si le nombre d'un ensemble d'articles coïncidents pour lesquels l'élément correspond à l'élément de l'article demandé est inférieur à un nombre maximal ;
-- si le nombre est inférieur au nombre maximal :
--- définissant chacun des articles coïncidents de l'ensemble comme un article recommandé respectif ; et
--- mettant à jour le nombre maximal en soustrayant le nombre d'articles coïncidents de l'ensemble ; et
-- si le nombre est supérieur au nombre maximal :
--- classant les articles coïncidents de l'ensemble par ordre croissant des différences de l'élément ; et
--- définissant chacun d'un ou plusieurs articles coïncidents de l'ensemble comme un article recommandé respectif de sorte que le nombre total d'articles coïncidents définis comme articles recommandés est égal au nombre maximal, le ou les articles coïncidents étant les articles coïncidents les mieux classés dans l'ensemble ; et
- générer, par le biais du processeur, un écran de recommandation **(SC1)** affichant une liste **(LI1)** d'articles recommandés **(articles B à article F)** accompagnée d'une description des articles recommandés **(articles B à article F) ;**
un afficheur **(14)** configuré pour fournir l'écran de recommandation généré **(SC1)** en réponse à l'indisponibilité de l'article demandé ; et
une unité de communication **(16)** configurée pour transmettre une demande à l'appareil de gestion de commandes **(2)** afin de passer une commande d'un article désigné, l'article désigné étant un article pour lequel une commande peut être passée.

2. Appareil de terminal de commande **(1)** selon la revendication 1, dans lequel la description comprend, pour chaque article recommandé, un numéro de page concernant une page sur laquelle l'article recommandé est décrit parmi une pluralité de pages d'un menu.

3. Appareil de terminal de commande **(1)** selon la revendication 1 ou 2, dans lequel le processeur **(11)** est configuré pour déterminer que l'article demandé est indisponible sur la base de données stockées dans une première mémoire de l'appareil de terminal de commande **(1).**

4. Appareil de terminal de commande **(1)** selon l'une quelconque des revendications 1 à 3, dans lequel le processeur **(11)** est configuré pour déterminer que l'article demandé est indisponible sur la base de données stockées dans une deuxième mémoire d'un dispositif externe en communication sans fil avec l'unité de communication **(16).**

5. Appareil de terminal de commande **(1)** selon l'une quelconque des revendications 1 à 4, dans lequel l'unité de communication **(16)** est configurée pour recevoir une indication provenant d'un dispositif externe indiquant que l'article demandé est indisponible.

6. Appareil de terminal de commande (1) selon l'une quelconque des revendications 1 à 5, dans lequel l'appareil de terminal de commande **(1)** est un dispositif portable.

7. Appareil de terminal de commande **(1)** selon l'une quelconque des revendications 1 à 6, dans lequel l'appareil de terminal de commande **(1)** est un dispositif fixe.

8. Procédé de fourniture de marchandises selon une commande d'un client dans un restaurant comprenant un système de point de vente, POS, **(100),** le système POS **(100)** comprenant un appareil de terminal portatif **(1)** et un appareil de gestion de commandes **(2),** le terminal portatif **(1)** comprenant un processeur **(11),** une unité de stockage principale **(12)** stockant un programme de traitement d'informations, une unité de communication **(16)** et un panneau tactile **(14),** le procédé comprenant le fait de :
déterminer, par le biais du processeur **(11)** exécutant le programme de traitement d'informations, un article demandé désigné comme candidat d'une commande sur la base d'une opération effectuée pour une commande par un opérateur ;
déterminer si l'article demandé est disponible en déterminant si l'article demandé est inclus dans une liste de rupture de stock stockée dans l'unité de stockage principale **(12),** le processeur **(11)** ajoutant les articles décrits dans des notifications de rupture de stock à la liste de rupture de stock, les notifications de rupture de stock étant reçues par l'unité de communication **(16)** en provenance de l'appareil de gestion de commandes **(2)** ;
si l'article demandé est indisponible :
- extraire, par le biais du processeur **(11)** exécutant le programme de traitement d'informations, des articles coïncidents sur la base d'une liste d'éléments, pour chacun des articles coïncidents, un élément respectif de la liste des articles coïncidents correspondant à un élément de la liste des articles demandés, la liste d'éléments comprenant au moins la période de temps pendant laquelle l'article est fourni, une tranche d'âge de clients et des conditions météorologiques dans lesquelles un article associé à la liste d'éléments est plus susceptible d'être commandé;
- juger, par le biais du processeur **(11)** exécutant le programme de traitement d'informations, des articles comme étant des articles recommandés sur la base des articles coïncidents extraits et de la liste d'éléments des articles coïncidents, l'étape de jugement comprenant, de manière itérative pour chaque élément de la liste d'éléments, le fait de :
-- déterminer si le nombre d'un ensemble d'articles coïncidents pour lesquels l'élément correspond à l'élément de l'article demandé est inférieur à un nombre maximal ;
-- si le nombre est inférieur au nombre maximal :
--- définir chacun des articles coïncidents de l'ensemble comme un article recommandé respectif ; et
--- mettre à jour le nombre maximal en soustrayant le nombre d'articles coïncidents de l'ensemble ; et
-- si le nombre est supérieur au nombre maximal :
--- classer les articles coïncidents de l'ensemble par ordre croissant des différences de l'élément ; et
--- définir chacun d'un ou plusieurs articles coïncidents de l'ensemble comme un article recommandé respectif de sorte que le nombre total d'articles coïncidents définis comme articles recommandés est égal au nombre maximal, le ou les articles coïncidents étant les articles coïncidents les mieux classés dans l'ensemble ;
- générer, par le biais du processeur **(11),** un écran de recommandation **(SC1)** affichant une liste **(LI1)** d'articles recommandés **(articles B à article F),** la liste **(LI1)** affichant un nom de chacun des articles recommandés et un numéro de page d'une page d'un menu sous forme de tableau décrivant le contenu de chacun des articles recommandés; et
afficher, sur le panneau tactile **(14),** l'écran de recommandation généré **(SC1).**

9. Programme informatique comprenant des instructions qui, lorsque le programme est exécuté par un ordinateur, amènent l'ordinateur à exécuter les étapes du procédé selon la revendication 8.

10. Support lisible par ordinateur sur lequel est stocké le programme informatique selon la revendication 9.
